# DEMANDE DE BREVET EUROPEEN

(11) **EP 0 866 539 A1**
(43) Date de publication de la demande: **23.09.1998**
(21) Numéro de dépôt: 98400628.8
(22) Date de dépôt: 17.03.1998
(51) Int. Cl.: H02K 1/24, H02K 1/27

(54) **Machine électrique tournante à excitation par bobinages, par aimants permanents ou à double excitation**

(30) Priorité: 20.03.1997 FR 9703429
(71) Demandeur: CENTRE NATIONAL DE LA RECHERCHE SCIENTIFIQUE (CNRS), 75016 Paris (FR)
(72) Inventeur: Lucidarme, Jean, 91700 Sainte Genevieve Des Bois (FR); Ben Ahmed, Abdelhamid, 94100 Saint Maur (FR); Gabsi, Mohamed, 94230 Cachan (FR); Multon, Bernard, 35200 Rennes (FR); Santander, Eduardo, 94320 Thiais (FR); Hoang, Emmanuel, 75001 Paris (FR)
(74) Mandataire: Obolensky, Michel

(57) **Abrégé**

Machine électrique tournante comprenant un rotor (2) dont le circuit magnétiques porte des éléments d'excitation et un stator (16) dont le circuit magnétique porte un bobinage statorique, caractérisée en ce que le circuit magnétique du rotor comporte montés sur un arbre (1) des flasques d'extrémité (3) et au moins un disque denté (4) disposé entre les flasques d'extrémité, les dents du disque denté étant régulièrement réparties à sa périphérie et au moins une pièce annulaire (9) montée sur les flasques d'extrémité et munie de lumières (10) régulièrement réparties à sa périphérie et dans chacune desquelles est engagée une dent d'au moins un disque denté, les flasques d'extrémité et ledit au moins un disque denté définissant entre eux des intervalles dans lesquels sont logés des éléments d'excitation (14,15).

## Description

La présente invention concerne les machines électriques tournantes et se rapporte plus particulièrement aux machines synchrones telles que les alternateurs pour véhicules automobiles, les moteurs de traction ou autres.

Parmi les alternateurs pour véhicules automobiles, on connaît les machines à griffes comprenant un noyau statorique qui porte un enroulement statorique ou de sortie triphasé.

Le rotor de la machine comporte deux éléments polaires à griffes imbriquées, reliés magnétiquement par un noyau autour duquel est enroulé un bobinage de champ.

On connaît également des alternateurs comprenant deux éléments polaires à griffes alignées entre lesquels est disposé un troisième élément polaire ayant des saillies disposées entre les éléments polaires à griffes.

D'autres alternateurs connus du type à double excitation comportent un rotor formé d'éléments polaires à griffes avec des aimants permanents latéraux de concentration du flux et un bobinage d'excitation déposé entre les éléments polaires.

Les machines tournantes du type à griffes présentent des composantes importantes de champ axial entraînant des pertes dans le fer importantes.

Par ailleurs, elle se prêtent mal à la juxtaposition de plusieurs machines pour réaliser une machine de plus grande puissance.

L'invention vise à remédier aux inconvénients des machines à griffes connues en créant une machine électrique tournante qui tout en étant d'une fabrication et d'un montage simples, se prête particulièrement bien à la juxtaposition de plusieurs éléments de machine pour permettre la réalisation de machines de forte puissance.

Elle a donc pour objet une machine électrique tournante comprenant un rotor dont le circuit magnétique porte des éléments d'excitation et un stator dont le circuit magnétique porte un bobinage statorique d'induit, caractérisée en ce que le circuit magnétique du rotor comporte montés sur un arbre des flasques d'extrémité et au moins un disque denté disposé entre les flasques d'extrémité, les dents du disque denté étant régulièrement réparties à sa périphérie et au moins une pièce annulaire montée sur les flasques d'extrémité et munie de lumières régulièrement réparties à sa périphérie et dans chacune desquelles est engagée une dent d'au moins un disque denté, les flasques d'extrémité et ledit au moins un disque denté définissant entre eux des intervalles dans lesquels sont logés des éléments d'excitation.

L'invention sera mieux comprise à l'aide de la description qui va suivre, donnée uniquement à titre d'exemple et faite en se référant aux dessins annexés, sur lesquels :
- la Fig.1 est une vue partielle en coupe d'une machine électrique tournante élémentaire à excitation par bobinage suivant l'invention;
- la Fig.2 est une vue en élévation latérale du rotor seul de la machine de la figure 1;
- la Fig.3 est une vue partielle en coupe d'une machine électrique élémentaire à excitation par aimants;
- la Fig.4 est une vue en élévation latérale du rotor de la machine de la figure 3;
- la Fig.5 est une vue partielle en coupe d'une variante de la machine de la figure 3;
- la Fig.6 est une vue partielle en coupe d'une machine électrique résultant de la juxtaposition de deux machines élémentaires de la figure 1;
- la Fig.7 est une vue en coupe partielle d'une machine électrique résultant de la juxtaposition de plusieurs machines élémentaires de la figure 3;
- la Fig.8 est une vue partielle développée du rotor de la machine de la figure 7;
- la Fig.9 est une vue partielle en coupe d'une machine à double excitation;
- la Fig.10 est une vue partielle en coupe d'une machine à double excitation résultant de la juxtaposition de deux machines élémentaires;
- la Fig.11 est une vue partielle en coupe d'une variante de la machine de la figure 10; et
- la Fig.12 est une vue partielle en coupe d'une autre variante de machine à double excitation.

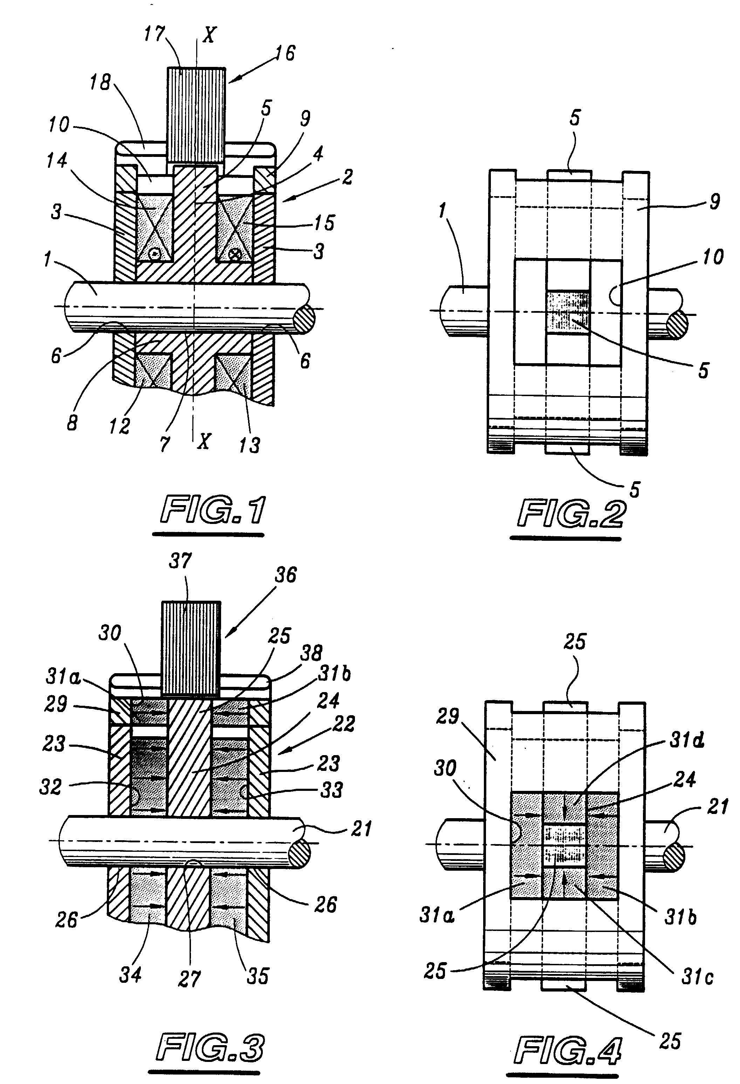

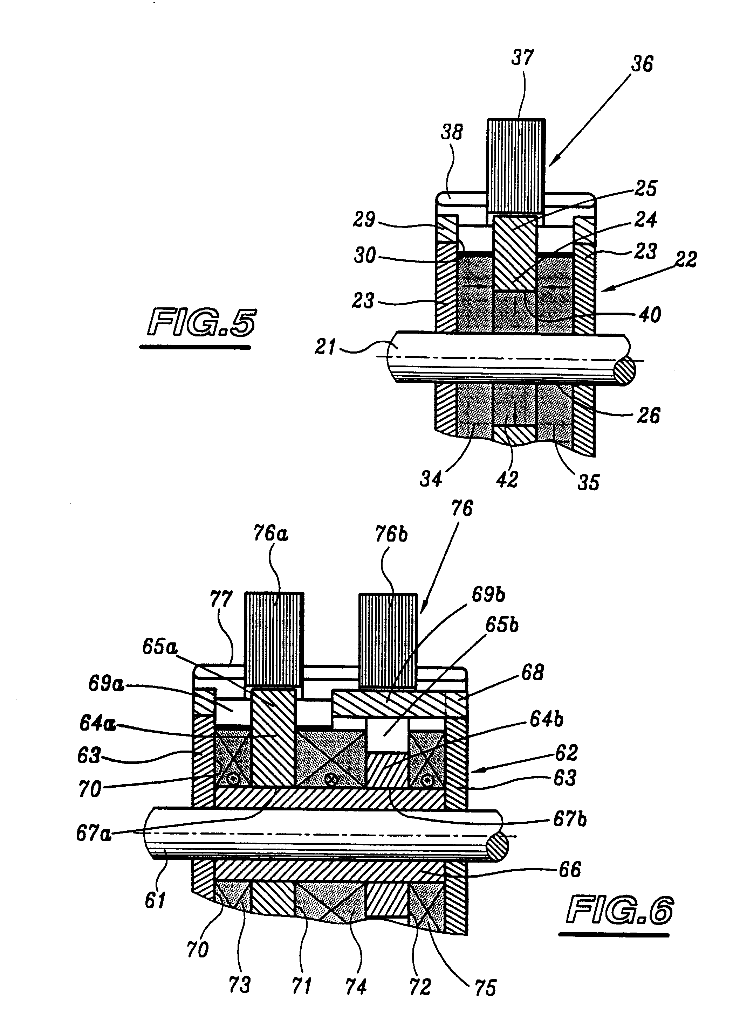

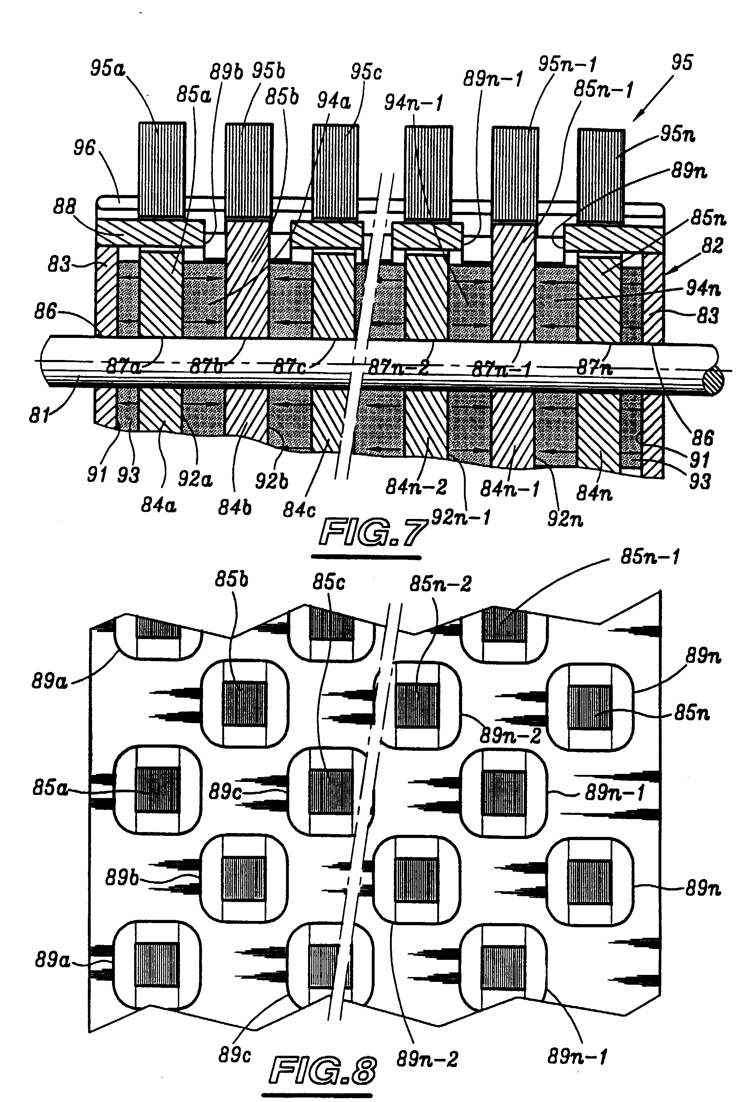

La machine électrique représentée aux figures 1 et 2, telle qu'un alternateur, est une machine élémentaire comprenant monté sur un arbre 1, un rotor 2 dont le circuit magnétique comporte des flasques d'extrémité 3 de forme circulaire et un disque intermédiaire 4 pourvu de dents 5 disposées à intervalles réguliers à sa périphérie.

Les flasques d'extrémité 3 et le disque denté 4 sont pourvus d'alésages centraux respectifs 6 et 7 traversés par l'arbre 1 et des entretoises 8 sont interposées entre le disque denté 4 et les flasques d'extrémité 3. Ces entretoises sont avantageusement constituées par un moyeu venu de matière, s'étendant de part et d'autre du disque denté 4 et entourant l'arbre 1.

Bien entendu, le disque 4 et les flasques d'extrémité 3 sont calés en rotation sur l'arbre 1 par des moyens appropriés non représentés.

Sur les flasques d'extrémité 3 est montée une pièce annulaire 9 pourvue de lumières 10 dans lesquelles comme cela apparaît clairement à la figure 2, sont engagées les dents 5 du disque denté 4.

Les différentes pièces constituant le circuit magnétique du rotor 2 sont réalisées en fer doux et sont assemblées par des moyens d'assemblage appropriés, non représentés tels que des vis, des ensembles de broches filetées et d'écrous ou analogues.

Le rotor 2 constitué de la manière décrite ci-dessus comporte deux chambres annulaires 12 et 13 définies chacune par le disque denté 4, l'un des flasques d'extrémité 3 et la pièce annulaire 9.

Dans chacune des chambres annulaires est monté un bobinage d'excitation de forme torique 14,15.

Le rotor 2 est entouré par un stator 16 comprenant un circuit magnétique feuilleté 17 sur lequel est monté un bobinage d'induit triphasé classique 18.

Les deux bobinages d'excitation 14 et 15 du rotor ont des courants opposés de telle sorte que les flux magnétiques qu'ils engendrent se referment par le disque denté 4.

La machine de la figure 1 présente un axe de symétrie X-X.

On peut assimiler le fonctionnement de la partie de cette machine située à droite ou à gauche de l'axe X-X à celui d'une machine à griffes classique de faible longueur axiale.

Il est bien connu que ce type de machine présente des composantes importantes de champ axial entraînant des pertes dans le fer importantes et d'autant plus importantes que la longueur axiale de la machine est plus grande.

Dans l'agencement suivant l'invention, ces pertes sont réduites car la symétrie de la machine par rapport à l'axe X-X annule rigoureusement dans le plan transversal contenant cet axe toute composante axiale et réduit d'un facteur deux, les longueurs axiales caractéristiques de la machine.

Par ailleurs, les flasques d'extrémité 3 et surtout le disque denté 4 peuvent être feuilletés.

Dans ce dernier cas, il est possible de réaliser l'assemblage des flasques d'extrémité 3 avec la pièce annulaire 9 au moyen d'encoches complémentaires (non représentées) réalisées dans les bords de ces pièces de manière à permettre leur emboîtement.

La machine représentée aux figures 3 et 4 est du type à excitation par aimants.

Elle comporte un arbre 21 portant un rotor 22 formé de deux flasques d'extrémité 23 et d'un disque denté 24 pourvu de dents périphériques 25 espacées entre elles à des intervalles angulaires réguliers.

Les flasques d'extrémités 23 et le disque denté 24 comportent des alésages respectifs 26 et 27 traversés par l'arbre 21.

Une pièce annulaire 29 pourvue de lumières 30 dans lesquelles sont engagés les dents 25 du disque denté 24, est montée sur les flasques d'extrémité 23.

Comme dans le mode de réalisation décrit en référence aux figures 1 et 2, les différentes pièces constituant le circuit magnétique du rotor 22 sont réalisées en fer doux et sont assemblées par des moyens d'assemblage appropriés non représentés.

Le rotor 22 comporte deux chambres annulaires 32,33 définies chacune par le disque denté 24, l'un des flasques d'extrémité 23 et la pièce annulaire 29. Dans chacune des chambres annulaires est monté un aimant annulaire 34,35.

Les aimants 34 et 35 sont de polarités opposées. Ainsi qu'on le voit clairement à la figure 4, les dents 25 du disque denté 24 engagées dans les lumières 30 de la pièce annulaire 29 sont entourées de petits aimants 31a, 31b, 31c, 31d de polarités appropriées.

L'ensemble des aimants sont avantageusement réalisables par exemple réalisés en une matière plastique chargée de particules de matériau magnétique que l'on aimante sur place par des moyens appropriés connus.

Les aimants entourant les dents 25 dans les lumières 30 peuvent également être supprimés.

Le rotor 22 est entouré par un stator 36 comprenant un circuit magnétique feuilleté 37 sur lequel est monté un bobinage d'induit triphasé classique 38.

Dans cet agencement, les pièces 23 et 24 peuvent être feuilletées entièrement.

Dans ce mode de réalisation, l'arbre 21 est réalisé en matériau amagnétique.

La machine représentée à la figure 5 est également une machine à excitation par aimants permanents semblable à la machine décrite en référence à la figure 3 et qui ne diffère de celle-ci qu'en ce que son disque denté 24 présente un alésage central 40 ayant un diamètre supérieur au diamètre de l'arbre 21. Un aimant annulaire 42 est interposé dans l'alésage 40 entre l'arbre 21 et le disque denté 24. L'arbre 21 est alors magnétique.

Comme dans le mode de réalisation décrit en référence aux figures 3 et 4, les dents 25 de la pièce dentée 24 de la machine de la figure 5 peuvent être entourées d'aimants permanents logés dans les lumières 30.

Il est également possible de disposer des aimants entre le disque denté 24 et la pièce annulaire 29, logés dans les intervalles entre les dents 25 de la pièce dentée 24.

Les aimants sont des pièces simples et leur surface disponible, lorsque les machines sont de faible longueur axiale, permet d'obtenir un fort taux de concentration du flux d'excitation pouvant aller jusqu'à la saturation, même avec des ferrites et même pour des machines à nombre de pôles réduit.

La présence de la pièce annulaire 29 dans le mode de réalisation de la figure 3, et de la pièce annulaire 49 dans le mode de réalisation de la figure 5, assure automatiquement le maintien des aimants, ce qui permet de résoudre de manière naturelle un problème technologique important.

On a vu que les machines décrites en référence aux figures 1 et 3 sont des machines de faible longueur. Pour obtenir des performances plus élevées, on juxtapose plusieurs machines.

La machine représentée à la figure 6, résulte de la juxtaposition des deux machines élémentaires, telles que celles de la figure 1.

Cette machine comporte un arbre 61 en matériau amagnétique sur lequel est calé en rotation un rotor 62 comprenant deux flasques d'extrémité 63 entre lesquels sont disposés deux disques dentés 64a et 64b pourvus de dents 65a, 65b disposées à des intervalles angulaires réguliers, les dents 65a du disque 64a étant décalées angulairement par rapport aux dents 65b du disque 64b.

Entre les flasques d'extrémité 63 est intercalée une entretoise annulaire 66 en matériau magnétique montée sur l'arbre 61. Les disques dentés 64a,64b comportent des alésages 67a et 67b respectivement, de diamètre égal au diamètre extérieur de l'entretoise 66, ils sont engagés sur cette entretoise et fixés sur celle-ci par tout moyen approprié.

Sur les flasques d'extrémité 63, est montée une pièce annulaire commune 68 pourvue de lumières 69a, 69b, dans lesquelles sont respectivement engagées les dents 65a, 65b des disques dentés 64a,64b.

Les flasques d'extrémité 63 délimitent avec les disques dentés 64a et 64b, trois chambres 70,71 et 72 dans lesquelles sont disposés des bobinages toriques 73,74,75, les sens d'enroulement de deux bobinages voisins étant inversés.

Le rotor 62 est engagé dans un stator 75 comprenant deux éléments de circuit magnétique feuilletés 76a, 76b disposés chacun en regard d'un disque denté 64a, 64b correspondant. Ces éléments de circuit magnétique portent un bobinage statorique d'induit triphasé 77 commun.

La pièce annulaire 68 peut, comme d'ailleurs les pièces annulaires des modes de réalisation décrits précédemment, être réalisée par exemple par juxtaposition de plusieurs pièces annulaires élémentaires centrées entre elles.

Grâce à l'agencement qui vient d'être décrit en référence à la figure 6, on réalise une machine par juxtaposition de deux machines élémentaires qui sont intrinséquement de faible longueur et assurent des taux d'induction élevés.

La juxtaposition ou mise en série suivant l'axe rotorique de plusieurs machines élémentaires suivant l'invention est rendue aisée en raison de la structure de chacune des machines élémentaires et aboutit à une machine telle que celle de la figure 6, formée de deux machines élémentaires ou davantage.

L'ensemble garde une compacité et une simplicité remarquables et possède les propriétés suivantes.

En ce qui concerne le stator, les encoches des machines élémentaires sont alignées et les bobinages sont communs. Il n'y a pas de tête de bobine entre les machines.

En ce qui concerne le rotor, non seulement, l'arbre est commun aux deux machines élémentaires, mais les parties intermédiaires communes telles que les flasques d'extrémité 2 des machines élémentaires juxtaposées, peuvent être supprimées.

La machine composite de la figure 6 présente une certaine imbrication qui simplifie les problèmes technologiques posés par la juxtaposition de deux machines indépendantes.

La machine représentée à la figure 7 résulte de la juxtaposition d'un grand nombre de machines élémentaires telles que celles représentées à la figure 3.

Elle comporte un arbre commun 81 en matière amagnétique qui porte un rotor 82 formé de deux flasques d'extrémité 83 et de disques dentés 84a à 84n comportant des dents 85a à 85n décalées les unes par rapport aux autres comme indiqué à la figure 8 sur laquelle on voit que les dents 85a à 85n-1 d'un disque denté 84a à 84n-1 sont décalées angulairement par rapport aux dents 85b à 85n d'un disque denté 84b à 84n suivant.

Les flasques d'extrémité 83 et les disques dentés 84a à 84n comportent des alésages 86 et 87a à 87n traversés par l'arbre amagnétique 81. Sur les flasques d'extrémité 83, est montée une pièce annulaire 88 ajourée de lumières 89a à 89n régulièrement réparties à sa périphérie décalées les unes par rapport aux autres de la manière représentée à la figure 8. Les dents 85a à 85n des disques dentés 84a à 84n sont engagées dans les lumières 89a à 89n correspondantes.

Dans les intervalles ménagés entre les flasques d'extrémité 83 et les disques dentés 84a à 84n, définissant avec l'arbre 81 et la pièce ajourée 88 formant chemise assemblée sur les flasques d'extrémité et les disques dentés, d'une part, deux chambres d'extrémité 91 situées entre le premier flasque d'extrémité 83 et le disque denté voisin 84a, et entre le second flasque d'extrémité 83 et le disque denté voisin 84n et d'autre part, des chambres 92a à 92n situées entre les disques dentés 84a à 84n sont disposés des aimants annulaires 93 et 94a à 94n. La disposition de ces aimants annulaires est telle que les polarités de deux aimants voisins sont de signes ou polarités contraires.

Les aimants d'excitation 93 situés dans les chambres d'extrémité 91 ont une épaisseur égale à la moitié des aimants 94a à 94n situés dans les chambres 92a à 92n définies entre les disques dentés 84a à 84n successifs.

Le rotor 82 qui vient d'être décrit est monté dans un stator 95 présentant autant d'éléments de circuit magnétique 95a à 95n que le rotor comporte de disques dentés 84a à 84n. Un bobinage statorique d'induit triphasé commun 96 est monté sur ces éléments de circuit magnétique.

Selon une variante non représentée de la machine décrite en référence aux figures 7 et 8, il est prévu d'intercaler dans les intervalles séparant les éléments de circuit magnétique 95a à 95n du stator, des empilages annulaires de tôles statoriques séparés des éléments de circuits magnétiques voisins par des entrefers.

De tels empilages statoriques intercalaires augmentent l'inductance du circuit d'induit, ce qui facilite l'alimentation et le défluxage.

La machine des figures 7 et 8 constituée par la juxtaposition de machines élémentaires du type décrit en référence à la figure 3, illustre la facilité avec laquelle on peut obtenir une machine électrique de forte puissance par assemblage et juxtaposition d'un grand nombre de machines élémentaires suivant l'invention.

On comprend par ailleurs que dans la machine décrite en référence aux figures 7 et 8, les aimants annulaires peuvent être remplacés par des bobinages annulaires d'excitation.

On va décrire ci-après différentes façons non exhaustives de combiner des machines élémentaires pour obtenir des machines à double excitation.

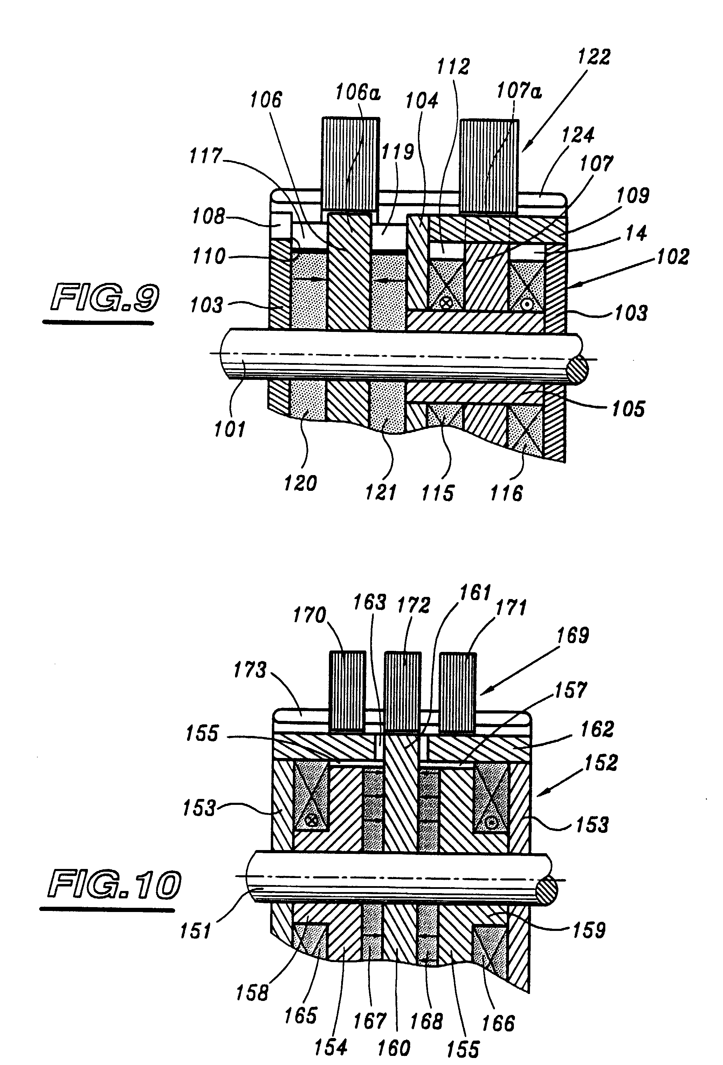

La machine représentée sur la figure 9 est une machine à double excitation qui résulte de la juxtaposition simple d'une machine élémentaire à excitation par bobinages du type décrit en référence à la figure 1 et d'une machine élémentaire à excitation par aimants d'un type similaire à la machine décrite en référence à la figure 3.

Cette machine comporte un arbre 101 sur lequel est monté un rotor 102 qui comporte des flasques d'extrémité 103 montés directement sur l'arbre 101. Un flasque intermédiaire 104, de liaison entre la machine élémentaire à excitation par bobinages et la machine élémentaire à excitation par aimants est monté à une extrémité d'une pièce tubulaire 105 appartenant à la machine à excitation par bobinages. Un disque denté 106 appartenant à la machine élémentaire à excitation par aimants est montée directement sur l'arbre 101 entre un flasque d'extrémité 103 et le flasque intermédiaire 104 et un disque denté 107 appartenant à la machine à excitation par bobinages est monté sur la pièce tubulaire 105 entre le flasque intermédiaire 104 et l'autre flasque d'extrémité 103. Sur le premier flasque d'extrémité 103 d'une part et sur le second flasque d'extrémité 103 d'autre part, sont montées des pièces annulaires ajourées 108 et 109 respectives comprenant chacune des lumières telles que la lumière 110 de la pièce 108, dans lesquelles sont engagées les dents 106a,107a des disques dentés 106,107.

Les pièces annulaires ajourées 108 et 109 sont en butée contre le flasque intermédiaire 104.

Dans les chambres annulaires 112 et 114 ménagées entre le second flasque d'extrémité 103, le disque denté 107 et le flasque intermédiaire 104 sont disposés des bobinages d'excitation 115 et 116 de forme torique.

Dans les chambres 117 et 119 ménagées entre le premier flasque d'extrémité 103, le disque denté 106 et le flasque intermédiaire 104, sont disposés des aimants annulaires 120 et 121 de polarités opposées.

Le rotor ainsi constitué est monté dans un stator 122 comprenant deux éléments de circuit magnétique feuilletés 123, 124 associés respectivement aux disques dentés 106 et 107 et sur lesquels est monté un bobinage triphasé statorique d'induit 134.

Cette machine, conserve les propriétés de structure des machines élémentaires des figures 1 et 5.

On obtient une certaine imbrication de ces deux machines, de sorte que les trajets de flux obtenus sont compatibles. Un système de bagues et balais (non représenté) est évidemment nécessaire, mais on retrouve dans la machine combinée la symétrie des machines élémentaires.

La machine représentée à la figure 10 est une machine à double excitation qui résulte de la combinaison des machines élémentaires du type décrit en référence aux figures 1 et 3 mais dont la disposition des éléments résulte d'une juxtaposition différente de ces machines élémentaires.

Cette machine comporte un arbre 151 sur lequel est monté un rotor 152 comprenant deux flasques d'extrémité 153 et en regard d'un flasque d'extrémité, un disque denté 154 muni de dents 155 et de l'autre flasque d'extrémité, un disque 156 muni de dents 157. Chacun des disques dentés 154 et 156 est muni d'un moyeu correspondant 158,159 en contact avec le flasque d'extrémité 153 correspondant.

Entre les disques dentés 154 et 156 associés aux flasques d'extrémité 153, est disposé un disque denté intermédiaire 160 muni de dents 161, directement monté sur l'arbre 151.

Sur les flasques d'extrémité 153 est montée une pièce annulaire 162 pourvue de lumières telles que 163 dans lesquelles sont engagées les dents 155,157 et 161 des disques dentés 154,156 et 160 respectivement, les séries de lumières associées respectivement aux disques dentés 154,156 et 160 étant décalées les unes par rapport aux autres d'une manière similaire à celles représentées sur la figure 8.

Dans les intervalles ménagés entre les flasques d'extrémité 153 et les disques dentés 154 et 156 sont disposés des bobinages d'excitation 165 et 166.

Dans les espaces ménagés entre les disques dentés 154 et 156 d'une part, et le disque denté intermédiaire 160 d'autre part, sont disposés les aimants annulaires 167,168 de polarités inverses.

Ainsi, les éléments de la machine à excitation par bobinages sont disposés de part et d'autre des éléments de la machine à excitation par aimants.

Le rotor ainsi constitué est associé à un stator 169 à trois éléments de circuits magnétiques feuilletés 170, 171,172 disposés en regard des trois disques dentés 154,156 et 160 et sur lesquels est monté un bobinage statorique d'induit triphasé 173.

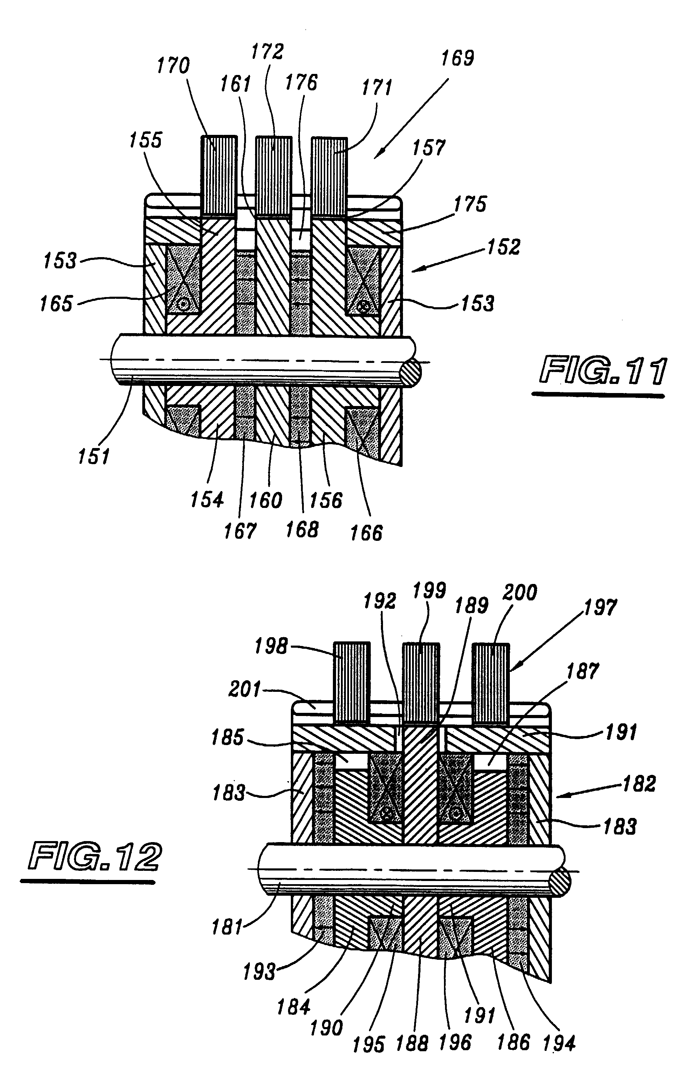

La machine représentée à la figure 11 est de construction semblable à celle de la figure 11 à l'exception du fait que les disques dentés 154, 156 et 160 ont des dents respectives 155, 157 et 161 occupant des positions angulaires identiques et que de ce fait, le rotor comporte une pièce annulaire 175 pourvue d'une seule série de lumières 176 dans chacune desquelles sont engagés simultanément des groupes de trois dents 155, 157 et 161 des trois disques dentés.

Grâce à cet agencement, il est possible de faire repasser le flux des aimants 167 et 168 par le circuit de retour des bobinages 165,166.

Les machines électriques décrites en référence aux figures 10 et 11 comportent une portion centrale formée d'une machine élémentaire à excitation par aimants et deux portions latérales formées chacune d'une partie de machine élémentaire à excitation par bobinages.

La machine représentée à la figure 12 diffère des machines des figures 10 et 11 en ce qu'elle comporte une partie centrale formée d'une machine élémentaire à excitation par bobinages de part et d'autre de laquelle sont disposées des portions symétriques d'une machine élémentaire à excitation par aimants.

Cette machine comporte un arbre 181 portant un rotor 182 qui comporte deux flasques d'extrémité 183 entre lesquels sont disposés un disque denté 184 pourvu de dents 185 disposé en regard du premier flasque d'extrémité 183, un second disque denté 186 muni de dents 187 disposé en regard du second flasque d'extrémité 183 et un disque denté intermédiaire 188 muni de dents 189 maintenu entre les premier et second disques dentés 184 et 186 par des moyeux entretoises 190,191 venus de matière respectivement avec le disque 184 et le disque 186.

Sur le flasque, l'extrémité 183 et les disques dentés 184,186 et 188, est montée une pièce annulaire ajourée 191 pourvue de lumières telles que 192 dans lesquelles sont engagées les dents telles que la dent 189 des disques dentés 184, 186 et 188.

Les lumières associées aux dents des disques dentés 184,186 et 188 sont décalées angulairement les unes par rapport aux autres.

Entre chaque flasque d'extrémité 183 et son disque denté 184, 186 associé, est disposé un aimant 193, 194. Entre les disques dentés 184 et 186 et le disque denté intermédiaire 188, sont disposés des bobinages annulaires 195, 196.

Les aimants 193 et 194 sont eux aussi de polarités opposées.

Au rotor ainsi constitué est associé un stator 197 comprenant trois éléments de circuit feuilletés 198,199,200 sur lesquels est monté un bobinage triphasé 201.

Les juxtapositions de machines telles que représentées aux figures 9 à 12 opérées à partir de deux et trois machines élémentaires peuvent naturellement se généraliser à des structures comprenant un plus grand nombre de machines élémentaires.

Ainsi, on peut par exemple remplacer les deux aimants terminaux de la structure de la figure 7 par des bobinages tels que décrits à la figure 10.

Bien que dans les exemples décrits en référence aux dessins, il soit essentiellement question de machines électriques triphasés, l'invention peut aussi bien s'appliquer à des machines à nombres de phases différents.

Les machines qui viennent d'être décrites présentent un certain nombre d'avantages.

Les machines à excitation par bobinages ou par aimants présentent une symétrie par rapport à un axe médian qui réduit les champs statoriques axiaux.

Elles sont simples et robustes.

Dans le cas de machines à excitation par aimants, l'excitation peut être à très forte concentration de flux, les ferrites pouvant alors remplacer dans tous les cas des matériaux plus onéreux.

Les aimants peuvent être de forme très simple et leur tenue mécanique est assurée par construction.

La juxtaposition des structures élémentaires se fait de façon naturelle tout en permettant la mise en commun d'éléments tant rotoriques que statoriques.

La mise en pratique d'une double excitation à la fois par aimants et par bobinages permet d'assurer une excitation nominale au moyen des aimants et une régulation du flux au moyen des bobinages. Ainsi, la dimension des bobinages peut être réduite.

On sait que le problème de la double excitation est difficile car la présence d'aimants est le plus souvent incompatible avec la présence de bobinages inducteurs.

Grâce à l'invention, on réalise une machine à double excitation de type particulier dont les flux engendrées à la fois par les aimants et les bobinages d'excitation du rotor, sont compatibles, c'est à dire qu'ils ont des trajets indépendants et qu'ils s'additionnent ou se soustraient selon le sens du courant d'excitation.

Les aimants de perméabilité proche de l'air ne peuvent être mis en série avec des bobinages tandis qu'une mise en parallèle les court-circuite.

L'emploi des structures suivant l'invention permet de résoudre ce problème.

Les modes de réalisation de machines décrits plus haut, apportent des solutions adaptées aux applications envisagées.

Les applications des machines suivant l'invention sont nombreuses.

On peut réaliser des alternateurs de rendement élevé.

On peut également réaliser des moteurs de traction par exemple pour l'automobile, par assemblage de n machines élémentaires, et obtenir ainsi des machines robustes, de construction simple et présentant un couple massique élevé.

L'invention s'applique en outre à la réalisation de moteurs fonctionnant à puissance constante sur une large plage de vitesses.

## Revendications

1. Machine électrique tournante comprenant un rotor (2;22;62;82;102;152;182) dont le circuit magnétique porte des éléments d'excitation et un stator (16;36;75;95;122; 169;197) dont le circuit magnétique porte un bobinage statorique, caractérisée en ce que le circuit magnétique du rotor comporte montés sur un arbre (1;21;61,81;101; 151; 181) des flasques d'extrémité (3;23;63;83;103;153;183) et au moins un disque denté (4;24;64a,64b;84a,...,84n; 106,107; 154,155;184,186) disposé entre les flasques d'extrémité, les dents du disque denté étant régulièrement réparties à sa périphérie et au moins une pièce annulaire (9;29;68;88; 108,109;162;175;191) montée sur les flasques d'extrémité et munie de lumières (10;30;69a,69b; 89a 89n; 110; 163;176; 192) régulièrement réparties à sa périphérie et dans chacune desquelles est engagée une dent d'au moins un disque denté, les flasques d'extrémité et ledit au moins un disque denté définissant entre eux des intervalles dans lesquels sont logés des éléments d'excitation (14,15;34,35;73,74,75;93, 94a,...94n; 115,116, 120,121; 165,166, 167,168; 193,194,195,196).

2. Machine électrique suivant la revendication 1, caractérisée en ce que le circuit magnétique du rotor comporte un disque denté (4) dont les dents (5) sont engagées dans les lumières (10) de la pièce annulaire (9), le disque denté (4) étant monté sur l'arbre (1) entre les flasques d'extrémité (3) et en ce que les éléments d'excitation sont des bobinages annulaires (14,15) disposés dans les intervalles ménagés entre les flasques d'extrémité (3) et le disque denté (4).

3. Machine électrique suivant la revendication 1, caractérisée en ce que le circuit magnétique du rotor comporte un disque denté (24) dont les dents (25) sont engagées dans les lumières (30) de la pièce annulaire (29) et en ce que les éléments d'excitation sont des aimants annulaires (34,35) de polarités inverses, interposés entre le disque denté (24) et les flasques d'extrémité (23).

4. Machine électrique suivant la revendication 3, caractérisée en ce que les flasques d'extrémité (23) et le disque denté (24) du rotor (22) sont montés directement sur l'arbre (21) réalisé en un matériau amagnétique.

5. Machine électrique suivant la revendication 3, caractérisée en ce que l'arbre (21) est magnétique et en ce que le disque denté (24) présente un alésage central (40) de diamètre supérieur au diamètre de l'arbre (21), un aimant annulaire (42) étant interposé entre l'arbre (21) et le disque denté (24) dans l'alésage central (40) de celui-ci.

6. Machine électrique suivant l'une des revendications 3 à 5, caractérisée en ce que les dents (25) du disque denté (24) engagées dans les lumières (30) de la pièce annulaire (29) sont entourées de petits aimants (31a,31b,31c,31d) interposés entre chaque dent (25) et les parois de la lumière (30) correspondante.

7. Machine électrique suivant les revendications 1 et 2 prises ensemble, caractérisée en ce qu'elle résulte de la juxtaposition de deux machines électriques à un disque denté (64a,64b), les dents (65a) d'un disque denté (64a) étant décalées angulairement par rapport aux dents (65b) de l'autre disque denté (64b), une pièce annulaire commune (68) pourvue de lumières (69a,69b) dans lesquelles sont engagées respectivement les dents (65a,65b) des disques dentés (64a,64b) étant montée sur les flasques d'extrémité (63) tandis qu'un bobinage annulaire (74) additionnel aux bobinages annulaires (73,75) interposés entre chaque disque denté (64a,64b) et le flasque d'extrémité (63) correspondant est disposé entre les deux disques dentés (64a, 64b), les sens des courants de deux bobinages voisins étant inversés et en ce que le stator (75) de la machine comporte deux éléments de circuit magnétique (76a, 76b) situés en regard des disques dentés (64a,64b) et qui portent un bobinage statorique (77) commun.

8. Machine électrique suivant les revendications 1 et 2 ou 1 et 3 prises ensemble, caractérisée en ce qu'elle résulte de la juxtaposition de n machines électriques à un disque denté (84a,...,84n), les dents d'un disque denté étant décalées angulairement par rapport aux dents du disque denté suivant, une pièce annulaire commune (88) pourvue de lumières (89a,...,89n) dans lesquelles sont engagées respectivement les dents (85a,...,85n) des disques dentés (84a,...,84n) étant montée sur les flasques d'extrémité (83) tandis que des éléments d'excitation annulaires (93,94a,...,94n) sont disposés entre les flasques d'extrémité (93) et les disques dentés (84a,84n) voisins de ceux-ci d'une part et entre les disques dentés successifs (84a,...,84n) d'autre part et en ce que le stator (95) de la machine comporte n éléments de circuit magnétique (95a,...,95n) disposés en regard des disques dentés et portant un bobinage statorique (96) commun.

9. Machine électrique suivant la revendication 8, caractérisée en ce que les éléments d'excitation sont des aimants, en ce que les aimants (93) situés entre les flasques d'extrémité (83) et les disques dentés (84a,84n) voisins de ceux-ci ont une épaisseur égale à la moitié des aimants (94a,...,94n) situés entre les disques dentés (84a,...,84n) successifs, et en ce que les aimants (93,94a,...,94n,93) successifs sont de polarités contraires.

10. Machine électrique suivant la revendication 9, caractérisée en ce que dans les intervalles séparant les éléments de circuit magnétique (95a,...,95n) du stator sont intercalés des empilages annulaires de tôles statoriques séparés des éléments de circuit magnétique voisins par des entrefers.

11. Machine électrique suivant les revendications 1,2 et 3, prises ensemble, du type à double excitation, caractérisée en ce qu'elle résulte de la juxtaposition d'une machine électrique à un disque denté (107), à excitation par bobinages (115,116) et d'une machine électrique à un disque denté (106) à excitation par aimants (120,121) et en ce qu'elle comporte un flasque intermédiaire (104) de liaison entre la machine à excitation par bobinages et la machine à excitation par aimants.

12. Machine électrique suivant la revendication 11, caractérisée en ce que les flasques d'extrémité (103) du rotor (102) sont montés directement sur l'arbre (101)- du rotor, le flasque intermédiaire (104) est monté à une extrémité d'une pièce tubulaire (105) de la machine à excitation par bobinages (115,116), le disque denté (106) appartenant à la machine à excitation par aimants est monté directement sur l'arbre (101) entre un flasque d'extrémité (103) et le flasque intermédiaire (104) et le disque denté (107) appartenant à la machine à excitation par bobinages, est monté sur la pièce tubulaire (105) entre le flasque intermédiaire (104) et un autre flasque d'extrémité (103), des pièces annulaires ajourées (108,109) sont montées sur le flasque d'extrémité (103) de la machine électrique à excitation par aimants d'une part, et sur le flasque d'extrémité (103) de la machine à excitation par bobinages d'autre part, les pièces annulaires (108,109) sont en butée contre le flasque intermédiaire (104), et le stator (122) de la machine comprend deux éléments de circuit magnétique (123,124) situés en regard des disques dentés et portant un bobinage statorique (134).

13. Machine électrique suivant les revendications 1,2 et 3 prises ensemble, du type à double excitation, caractérisée en ce qu'elle résulte de la combinaison d'au moins une machine à excitation par aimants (167,168) et d'au moins une machine à excitation par bobinages (165,166) dont les éléments sont disposés de part et d'autre de ceux de la machine à excitation par aimants.

14. Machine électrique suivant la revendication 13, caractérisée en ce que son rotor (152) comporte deux flasques d'extrémité (153), un disque denté (154) en regard d'un flasque d'extrémité (153), un disque denté (156) en regard de l'autre flasque d'extrémité et entre les disques dentés (154,156) associés aux flasques d'extrémité, un disque denté intermédiaire (160), une pièce-annulaire (162; 175) pourvue de lumières (163;176), montée sur les flasques d'extrémité (153), les dents (155,157,161) des disques dentés étant engagées dans les lumières de la pièce annulaire (162), des bobinages d'excitation (165,166) disposés entre les flasques d'extrémité (153) et les disques dentés (154,156) qui leurs sont associés et des aimants (167,168) disposés entre les disques dentés (154,156) associés aux flasques d'extrémité (153) et le disque denté intermédiaire (160).

15. Machine électrique suivant la revendication 14, caractérisée en ce que les dents (155,157,161), des disques dentés (154,156,160) sont engagées dans des lumières (163) respectives de la pièce annulaire (162),les séries de lumières de réception des dents d'un disque denté étant décalées angulairement par rapport aux séries de lumières de réception des dents de chaque disque denté voisin.

16. Machine électrique suivant la revendication 14, caractérisée en ce que la pièce annulaire (175) est munie d'une seule série de lumières (176) dans chacune desquelles sont engagés simultanément des groupes de trois dents (155,157,161) des disques dentés (154,156,160).

17. Machine électrique suivant l'une des revendications 13 à 16, caractérisée en ce que son stator (169) comporte trois éléments de circuits magnétiques (170,171,172) disposés en regard des disques dentés (154,156,160) et sur lesquels est monté un bobinage statorique (173).

18. Machine électrique suivant les revendications 1,2 et 3 prises ensemble, du type à double excitation, caractérisée en ce qu'elle résulte de la combinaison d'au moins une machine à excitation par bobinages (195,196) et d'au moins une machine à excitation par aimants (193,194) dont les éléments sont disposés de part et d'autre de ceux de la machine à excitation par bobinages.

19. Machine électrique suivant la revendication 18, caractérisé en ce qu'elle comporte deux flasques d'extrémité (183) auxquels sont respectivement associés des disques dentés (184,186), un disque denté intermédiaire (188) étant interposé entre les disques dentés (184,186) associés aux flasques d'extrémité, une pièce annulaire (191) pourvue de lumières (192) dans lesquelles sont engagées les dents (189) des disques dentés (184,186,188) étant montée sur les flasques d'extrémité et les disques dentés, des aimants (193,194) étant disposés entre les flasques d'extrémité (183) et les disques dentés (184,186) qui leur sont associés et des bobinages (195,196) étant interposés entre ces disque dentés (184,186) et le disque denté intermédiaire (188).
